Europäisches Patentamt

(19) European Patent Office

Office européen des brevets

(11) Numéro de publication : **0 448 417 A1**

(12) **DEMANDE DE BREVET EUROPEEN**

(21) Numéro de dépôt : **91400286.0**

(22) Date de dépôt : **07.02.91**

(51) Int. Cl.⁵ : **B60T 13/57**

(30) Priorité : **15.03.90 IT 6718690**

(43) Date de publication de la demande :
**25.09.91 Bulletin 91/39**

(84) Etats contractants désignés :
**DE FR GB IT**

(71) Demandeur : **BENDIX ITALIA S.p.A.**
**Via Cavalli 53 A Casella Postale 66**
**I-26013 Crema (IT)**

(72) Inventeur : **Cadeddu, Leonardo, Bendix**
**Europe**
**Services Techniques, 126 rue de Stalingrad**
**F-93700 Drancy (FR)**

(74) Mandataire : **Lejet, Christian et al**
**Bendix Europe Service Techniques Service**
**Brevets 126 rue de Stalingrad**
**F-93700 Drancy (FR)**

(54) **Servomoteur d'assistance au freinage.**

(57)    L'invention concerne un servomoteur d'assistance au freinage, comportant un boîtier (10) dans lequel se déplace un piston moteur (12) comportant un moyeu (14) et séparant une chambre avant (16) d'une chambre arrière (18), la chambre avant (16) étant reliée à une source de fluide sous une première pression, la chambre arrière (18) étant susceptible d'être reliée à une source de fluide sous une deuxième pression et le piston moteur (14) étant susceptible de se déplacer à partir d'une position de repos en réponse à l'établissement d'une différence entre les première et seconde pressions entre les deux chambres (16,18), la différence de pression étant commandée par des moyens de valve (20) associés à des organes de commande d'entrée (34,62,60).

    Selon l'invention, la liaison (62) entre la chambre arrière (18) et la source de fluide sous la deuxième pression est réalisée par les organes de commande d'entrée (34,62,60).

EP 0 448 417 A1

Jouve, 18, rue Saint-Denis, 75001 PARIS

FIG.1

## SERVOMOTEUR D'ASSISTANCE AU FREINAGE

La présente invention a pour objet un servomoteur d'assistance au freinage, et plus particulièrement du type comportant un boîtier dans lequel se déplace un piston moteur comportant un moyeu et séparant une chambre avant d'une chambre arrière, la chambre avant étant reliée à une source de fluide sous une première pression, la chambre arrière étant susceptible d'être reliée à une source de fluide sous une deuxième pression et le piston moteur étant susceptible de se déplacer à partir d'une position de repos en réponse à l'établissement d'une différence entre les première et seconde pressions entre les deux chambres, la différence de pression étant commandée par des moyens de valve associés à des organes de commande d'entrée.

De tels servomoteurs sont bien connus dans la technique du freinage et fonctionnent parfaitement. Le cas d'utilisation le plus fréquent se rencontre lorsque la chambre avant est reliée à une source de dépression et que la chambre arrière est susceptible d'être reliée à une source d'air à la pression atmosphérique lors de l'actionnement des moyens de valve.

Cependant, il existe des cas où l'on désire utiliser, non plus l'air à pression atmosphérique, mais de l'air sous une pression supérieure, par exemple de l'air comprimé, pour accroître l'effet d'assistance, pour réduire l'encombrement du servomoteur, etc...

Diverses solutions ont été proposées dans ce sens. C'est ainsi que US-A-3 780 620 décrit un servomoteur dans lequel les moyens de valve comportent un plongeur situé dans le moyeu du piston, qui peut occuper trois positions. Dans la première, il permet la communication entre la chambre avant et la chambre arrière en ouvrant un passage dans les moyens de valve. Dans la seconde, le plongeur obture ce passage et permet la pénétration d'air à la pression atmosphérique par les moyens de valve dans la chambre arrière et ainsi la création d'une différence de pression sur le piston moteur procurant l'assistance recherchée. Dans la troisième, le plongeur enclenche des seconds moyens de valve pour admettre de l'air sous une pression supérieure à la pression atmosphérique dans la chambre arrière. Un tel agencement est très compliqué donc très onéreux et peu fiable.

On connaît, d'autre part, par US-A-4 117 769, un servomoteur qui comprend, à l'intérieur de la chambre arrière, une organe moteur auxiliaire comportant une chambre de pression apte à être reliée à une source de pression extérieure par l'intermédiaire d'un dispositif de commande. Lorsque le dispositif de commande est actionné, l'organe moteur auxiliaire exerce ainsi sur le piston moteur du servomoteur une force d'assistance auxiliaire totalement indépendante de la force d'assistance induite par l'actionnement de la pédale de frein. Dans le document US-A-4 117 769, cette force d'assistance auxiliaire est utilisée totalement indépendamment du système de freinage normal du véhicule, pour permettre l'adjonction sur ce dernier d'un système de freinage automatique assisté, sans qu'il soit nécessaire d'avoir recours à un servomoteur supplémentaire. Un tel système nécessite donc un dispositif de commande supplémentaire, et une modification importante du servomoteur pour y inclure l'organe moteur auxiliaire.

La présente invention a donc pour objet un servomoteur d'assistance au freinage dont l'efficacité est améliorée de façon simple, et fiable, en n'apportant que des modifications mineures aux servomoteurs existants.

Selon l'invention, ce résultat est obtenu grâce à un servomoteur du type rappelé plus haut, dans lequel la liaison entre la chambre arrière et la source de fluide sous la deuxième pression est réalisée par les organes de commande d'entrée. Selon un mode avantageux de réalisation, cette liaison est réalisée par un passage ménagé dans les organes de commande d'entrée.

Dans un mode de réalisation préféré, les moyens de valve comprennent un élément de clapet annulaire comportant une partie active susceptible de coopérer sélectivement avec un premier et un second sièges de clapet concentriques formés respectivement dans le moyeu et par un plongeur de valve coulissant dans le moyeu, l'élément de clapet étant monté dans le moyeu par l'intermédiaire d'une pièce de maintien disposée dans le moyeu et formant un premier appui pour un ressort de rappel de la tige d'entrée et un second appui pour un ressort de valve sollicitant la partie active de l'élément de clapet vers les premier et second sièges, et, conformément à l'invention, une membrane annulaire est montée dans le moyeu, entre le moyeu et les organes de commande d'entrée.

De manière également avantageuse, cette membrane annulaire définit avec l'élément de clapet annulaire une chambre annulaire dans laquelle débouche le passage ménagé dans les organes de commande d'entrée.

D'autres buts, caractéristiques et avantages de la présente invention ressortiront de la description qui suit d'un exemple de réalisation donné à titre purement illustratif en référence aux dessins annexés dans lesquels :

– la Figure 1 représente en coupe la partie centrale arrière d'un servomoteur réalisé conformément à la présente invention;

– la Figure 2 est une vue en coupe à échelle réduite selon la ligne II-II de la Figure 1.

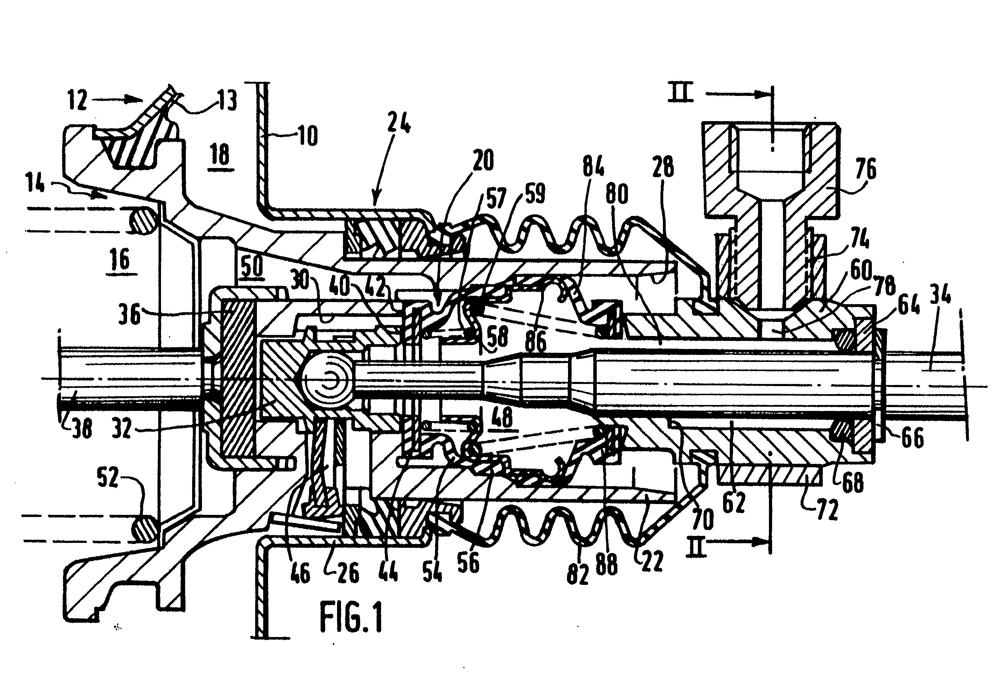

Par convention, on appelle "avant" la direction vers laquelle se déplacent les différentes pièces lorsqu'elles sont actionnées et "arrière" la direction vers laquelle ces pièces se déplacent lorsqu'elles reviennent dans leur position de repos. Ainsi, sur la Figure 1, l'avant est situé à gauche de la Figure, et l'arrière à droite.

On reconnaît sur la Figure 1 la partie arrière centrale d'un servomoteur d'assistance au freinage comprenant dans un boîtier 10 un piston 12 constitué d'une structure de paroi mobile à membrane 13 et d'un moyeu, désigné dans son ensemble par la référence 14, divisant l'intérieur du boîtier en une chambre avant 16 destinée à être reliée en permanence à une source de fluide sous une première pression, classiquement une source de vide d'un véhicule automobile, par exemple la tubulure d'admission du moteur de ce véhicule (non représenté), et une chambre arrière 18 ou chambre de travail susceptible d'être mise en communication soit avec la chambre avant 16 soit avec une source de fluide sous une deuxième pression, classiquement l'atmosphère, par l'intermédiaire d'un moyen de valve, comportant un élément de clapet annulaire, désigné dans son ensemble par la référence 20.

L'ensemble de piston 12 comprend une partie de moyeu tubulaire arrière 22, montée à coulissement étanche, avec interposition d'un ensemble 24 d'une bague de guidage et d'un joint d'étanchéité coulissant, dans une cheminée centrale arrière 26 de la paroi arrière 10 du boîtier.

La partie de moyeu tubulaire 22 est formée avec un logement étagé intérieur 28 se raccordant vers l'avant avec un alésage central 30 dans lequel est monté coulissant un plongeur de valve 32 couplé à une tige d'entrée 34 du servomoteur, destinée à être reliée à une pédale de frein (non représentée) du véhicule et s'étendant axialement centralement dans le logement étagé 28.

Le moyeu 14 supporte également, avec interposition d'un disque de réaction 36, avec lequel le plongeur de valve 32 est susceptible de coopérer en engagement de compression, une tige de sortie 38 du servomoteur destinée à être couplée à un piston d'un maître-cylindre (non représenté) et associée au servomoteur d'assistance.

L'extrémité arrière du plongeur de valve 32 forme un siège de clapet annulaire central 40, la zone de raccordement entre le logement étagé 28 et l'alésage 30 formant un autre siège de clapet annulaire 42 entourant le précédent et concentrique à celui-ci. L'élément de clapet 20 comporte une partie active annulaire avant 44 d'extension générale radiale, typiquement renforcée par une plaque annulaire métallique, destinée à coopérer sélectivement avec les sièges de clapet 40 et 42, de façon à commander la mise en communication de la chambre de travail arrière 18, via un passage 46 formé radialement dans le moyeu 14 et communiquant avec l'alésage 30, avec l'espace 48 situé derrière l'élément de clapet 20, ou avec la chambre avant 16 via des passages d'air 50 formés axialement dans le moyeu 14 et débouchant dans l'extrémité avant du logement étagé 28 autour du siège de clapet 42 et de la partie active 44 de l'élément de clapet 20. Dans la position de repos, l'ensemble de piston 12 est positionné au voisinage de la paroi arrière 10 sous l'effet d'un ressort de rappel de piston 52.

L'extrémité radialement extérieure de la partie active 44 de l'élément de clapet 20 est prolongée vers l'arrière par une partie tubulaire ondulée axiale 54 venue de matière avec le matériau élastomère de la partie active 44 et se terminant, à l'arrière, par un bourrelet de montage 56 prenant appui sur un épaulement s'étendant radialement vers l'intérieur du logement étagé 28 et comprimé radialement contre la paroi de ce logement par une coupelle de maintien de clapet 58. Cette coupelle 58 présente, en section radiale, une forme de "S" dont l'arrondi intérieur sert d'appui pour un ressort de clapet 57 sollicitant axialement la partie active 44 de l'élément de clapet 20 dans la direction des sièges de clapet 40 et 42, et dont l'arrondi extérieur forme appui pour un ressort 59 de rappel de la tige 34.

Conformément à la présente invention, on peut accroître l'efficacité du servomoteur en mettant l'espace 48 situé derrière l'élément de clapet 20, non plus sous pression atmosphérique comme il est connu, mais sous une pression supérieure. Ce résultat est obtenu, dans l'exemple représenté, en disposant sur l'extrémité arrière de la tige d'entrée 34 un manchon 60 de diamètre légèrement supérieur à celui de la tige d'entrée de façon à ménager autour d'elle un volume annulaire 62. Le manchon 60 est maintenu sur la tige d'entrée 34, à l'arrière par un anneau de centrage 64 et un anneau d'arrêt 66, un joint 68 assurant l'étanchéité entre le volume 62 et l'atmosphère extérieure, et à l'avant par un épaulement 70 du manchon dirigé radialement vers l'intérieur et de diamètre égal à celui de la tige d'entrée 34.

Sur le manchon 60 est disposée une pièce de raccordement 72 entourant le manchon 60 et pourvue d'une extension cylindrique 74 dirigée radialement vers l'extérieur, et dont l'intérieur est taraudé pour recevoir un embout 76 de raccordement à une source de fluide (non représentée). Un perçage 78 est pratiqué dans le manchon 60, au droit de l'extension cylindrique 74, pour faire communiquer le volume 62 avec l'intérieur de l'embout 76, et une gorge 80 est pratiquée dans l'épaulement 70 pour faire communiquer le volume 62 avec l'espace 48.

Il n'est plus alors nécessaire que d'assurer l'étanchéité des volumes 48 et 62 par rapport à l'atmosphère, ce qui peut être réalisé de différentes manières. Le manchon 60 peut être rendu coulissant de façon étanche dans le logement 28. On peut également prévoir un soufflet 82 fixé de façon étanche, d'une part sur la partie arrière de la cheminée 26 et d'autre part sur le manchon 60.

Dans le mode de réalisation préféré représenté à titre d'exemple, il est prévu une membrane annulaire 84, maintenue de façon étanche d'une part contre la paroi du logement 28 par un anneau de maintien 86, et d'autre part sur le manchon 60. De façon avantageuse, pour faciliter l'assemblage de l'ensemble, on peut prévoir, comme dans l'exemple représenté, que cette membrane soit maintenue appliquée sur l'extrémité avant du manchon 60 par le ressort 59 de rappel de tige lui-même, par l'intermédiaire d'une partie annulaire 88 s'étendant radialement, et conformée d'une façon semblable à celle de la partie active 44 de l'élément de clapet 20.

A titre de variantes, on pourra prévoir que la membrane 84 et que l'élément de clapet 20 soient identiques, ou qu'ils soient venus de matière l'un avec l'autre. On pourra également prévoir que la coupelle de maintien de clapet 58 et l'anneau de maintien 86 soient venus de matière l'un avec l'autre.

Ainsi qu'il vient d'être décrit, le fonctionnement mécanique du servomoteur est identique à celui d'un servomoteur classique lorsque la chambre avant 16 est soumise à une dépression et que du fluide à la pression atmosphérique est admis par l'embout 76.

Grâce à l'invention, d'autres types de fonctionnement peuvent être envisagés, puisque n'importe quelle différence de pression entre les chambres avant 16 et arrière 18 peut être obtenue et non plus uniquement celle qui existe entre la dépression régnant dans la tubulure d'admission du moteur et la pression atmosphérique.

Ainsi, lorsque la chambre avant 16 est soumise à une dépression et que l'embout 76 est relié à une source de fluide sous une pression supérieure à la pression atmosphérique, l'effet d'assistance sera d'autant plus grand que la pression fournie par cette source sera plus élevée. En conséquence, pour une efficacité désirée, il est possible de concevoir un servomoteur moins encombrant, et inversement, un servomoteur d'une taille donnée pourra fournir une efficacité plus élevée.

Un autre avantage de ce mode de fonctionnement où le servomoteur est relié d'une part à une source de dépression et d'autre part à une source de pression réside dans le fait que, dans le cas d'une défaillance d'une des deux sources, une assistance partielle est conservée.

De même, par exemple pour résoudre des problèmes de pollutions, si on ne désire pas relier la chambre avant 16 à la tubulure d'admission, l'invention permet de la mettre à la pression atmosphérique, l'assistance étant fournie par le fluide sous pression présent dans le volume 48.

On a donc réalisé grâce à l'invention un servomoteur dont l'efficacité est améliorée de tout facteur désiré. Les essais réalisés par la Demanderesse ont montré que ce facteur pouvait être compris entre 37,5 % et 500 %, selon la pression sous laquelle est le fluide arrivant par l'embout 76.

La source de fluide sous pression peut consister en un compresseur entraîné par le moteur du véhicule, ou en un compresseur électrique. Un avantage considérable du servomoteur selon l'invention réside dans le fait que lorsqu'il est utilisé sur un véhicule disposant déjà d'une source de fluide sous pression, par exemple les véhicules à suspension pneumatique, il ne nécessite pas de source propre de fluide sous pression, et son installation peut donc être réalisée à un coût minime.

De plus, tous ces avantages sont obtenus par une modification simple du système impliquant du même coup la fiabilité du fonctionnement et le faible coût de la mise en oeuvre.

Bien entendu, l'invention n'est pas limitée au mode de réalisation qui vient d'être décrit à titre d'exemple, mais en couvre toutes les variantes que l'homme de l'art pourra lui apporter. Par exemple, l'amenée de fluide sous la deuxième pression dans l'espace situé derrière le moyeu de clapet pourra être réalisée par un perçage effectué directement dans la tige d'entrée, débouchant dans cet espace et le mettant en communication avec la source de fluide. Par ailleurs, l'invention trouve application aussi bien dans les servomoteurs simples que dans les servomoteurs doubles encore appelés tandem. Enfin, le fluide sous la deuxième pression peut être fourni en permanence, ou n'être fourni qu'au moment où le conducteur actionne la pédale de frein, ou qu'à celui où une certaine pression règne dans le circuit de freinage.

## Revendications

1. Servomoteur d'assistance au freinage, comportant un boîtier (10) dans lequel se déplace un piston moteur (12) comportant un moyeu (14) et séparant une chambre avant (16) d'une chambre arrière (18), la chambre avant (16) étant reliée à une source de fluide sous une première pression, la chambre arrière (18) étant susceptible d'être reliée à une source de fluide sous une deuxième pression et le piston moteur (14) étant susceptible de se déplacer à partir d'une position de repos en réponse à l'établissement d'une différence entre les première et seconde pressions entre les deux chambres (16,18), la différence de pression étant commandée par des moyens de valve (20) associés à des organes de commande d'entrée (34,62,60), caractérisé par le fait que la liaison (62) entre la chambre arrière (18) et la source de fluide sous la deuxième pression est réalisée par les organes de commande d'entrée (34,62,60).

2. Servomoteur selon la revendication 1, caractérisé par le fait que la liaison entre la chambre arrière (18) et la source de fluide sous la deuxième pression est réalisée par un passage (62) ménagé dans les organes de commande d'entrée (34,62,60).

3. Servomoteur selon la revendication 2, caractérisé par le fait que les organes de commande d'entrée (34,62,60) sont constitués par une tige d'entrée (34) autour de laquelle est fixé un manchon (60), le passage (62) étant ménagé entre la tige d'entrée (34) et le manchon (60).

4. Servomoteur selon la revendication 1, dans lequel les moyens de valves comprennent un élément de clapet annulaire (20) comportant une partie active (44) susceptible de coopérer sélectivement avec un premier (42) et un second (40) sièges de clapet concentriques formés respectivement dans le moyeu (14) et par un plongeur de valve (32) coulissant dans le moyeu (14), l'élément de clapet (20) étant monté dans le moyeu (14) par l'intermédiaire d'une coupelle de maintien (58) disposée dans le moyeu (14) et formant un premier appui pour un ressort de rappel (59) de la tige d'entrée et un second appui pour un ressord de valve (57) sollicitant la partie active (44) de l'élément de clapet (20) vers les premier (42) et second (40) sièges, caractérisé par le fait qu'une membrane annulaire (84) est montée dans le moyeu (14), entre le moyeu (14) et les organes de commande d'entrée (34,60).

5. Servomoteur selon la revendication 4, caractérisé par le fait que la membrane annulaire (84) est montée sur le moyeu (14) par l'intermédiaire de la coupelle de maintien de clapet (58).

6. Servomoteur selon la revendication 4, caractérisé par le fait que la membrane annulaire (84) est maintenue sur les organes de commande d'entrée (34,60) par le ressort de rappel (59) de la tige d'entrée (34).

7. Servomoteur selon l'une des revendications 4 à 6, caractérisé par le fait que la membrane annulaire (84) définit avec l'élément de clapet annulaire (20) une chambre annulaire (48) dans laquelle débouche le passage (62) ménagé dans les organes de commande d'entrée (34,60).

8. Servomoteur selon l'une des revendications précédentes, caractérisé par le fait que la première pression est inférieure ou égale à la pression atmosphérique.

9. Servomoteur selon l'une des revendications précédentes, caractérisé par le fait que la deuxième pression est supérieure ou égale à la pression atmosphérique.

FIG.1

EP 0 448 417 A1

Office européen  **RAPPORT DE RECHERCHE EUROPEENNE**  Numero de la demande
des brevets

EP  91 40 0286

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | FR-A-1555011 (THE BENDIX CORPORATION) <br> * page 2, colonne de gauche, ligne 8 - page 3, colonne de droite, ligne 35; figures 1-3 * <br> --- | 1, 2, 4, 6-9 | B60T13/57 |
| X | FR-A-2206219 (THE BENDIX CORPORATION) <br> * le document en entier * <br> --- | 1, 2 | |
| X | DE-A-2757879 (TOKICO LTD.) <br> * page 6, ligne 6 - page 10, ligne 17; figure 1 * <br> ----- | 1, 2 | |

DOMAINES TECHNIQUES RECHERCHES (Int. Cl.5 )

B60T

Le présent rapport a été établi pour toutes les revendications

| Lieu de la recherche | Date d'achèvement de la recherche | Examinateur |
|---|---|---|
| LA HAYE | 12 JUIN 1991 | HARTEVELD C.D.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

8